(19) Europäisches Patentamt
European Patent Office
Office européen des brevets

(11) **EP 2 667 148 A2**

(12) # EUROPEAN PATENT APPLICATION

(43) Date of publication:
**27.11.2013 Bulletin 2013/48**

(51) Int Cl.:
***G01B 11/02*** *(2006.01)*

(21) Application number: **13460033.7**

(22) Date of filing: **27.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.05.2012 PL 39930912**

(71) Applicant: **Polska Spólka Inzynierska DigiLab sp. z o.o.**
**02-486 Warszawa (PL)**

(72) Inventors:
• **Makowski, Jerzy**
  **02-956 Warszawa (PL)**
• **Orzechowski, Jan**
  **00-634 Warszawa (PL)**
• **Wierzbicki, Michal**
  **02-641 Warszawa (PL)**
• **Jablonski, Ryszard**
  **02-798 Warszawa (PL)**

(54) **Method and device for measurement of linear dimension of an object**

(57)     The coordinates $^{A}X_{1/2}$ and $^{B}X_{1/2}$ of respective edges A and B of an object (4) are determined from the half amplitudes $A_{1/2}$ and $B_{1/2}$ of the highest peaks in the diffractive pattern created by these edges. The half amplitudes $A_{1/2}$ and $B_{1/2}$ are calculated as half of the difference between these peak amplitudes $A_{max}$ or $B_{max}$, and the background T. The raw linear dimension of the object (4) is calculated from the difference of the coordinates $^{A}X_{1/2}$ and $^{B}X_{1/2}$, and corrected with a set of calibration data, and also corrected for the difference in temperature. Two dimensional profile of the object (4) edges can be obtained. A device for measurement of linear dimension of the measured object comprises a source of radiation (1), the means adjusting and focusing the beam of radiation (2) in the focus zone around the optical axis (6), a photodetector (5), preferably a photodiode or a photomultiplier converting incident radiation into electric signal, and a transport assembly (8) moving the measured object (4) along a path (7) transverse to the optical axis 6 and arranged between the focus zone and the photodetector (5). The transport assembly (8) and the photodetector (5) are coupled to at least one recording and controlling (R&C) device (9) which comprises a memory for storage of pairs of data collected in subsequent moments of time and consisting of the object coordinate along the path (7), and the level of the photodetector signal. The R&C device (9) also comprises a photodetector interface (10) coupled to the photodetector (5), and a positioning interface (11) controlling the position of the support of the measured object (4). The photodetector interface (10) and the positioning interface (11) are coupled to a R&C controller (12) which automates the measuring device, and analyzes and processes mentioned pairs of data and calculates raw and corrected value of linear dimension of the measured object (4). Optionally a display monitor and a printer are coupled to the R&C device (9).

Fig. 1

EP 2 667 148 A2

## Description

The invention discloses a method of very precise measurement of linear dimension, e.g. thickness, width or length of an object. The method is based on new principles of analysis of a diffraction pattern received on edges of measured object and due to its accuracy can be applied for example in very accurate measurement of thickness of rollers for the roller bearings, or dimensions of microelements in nano-mechatronic devices, or diameters of implants for neurosurgery, etc. The area of applications of claimed invention is practically unlimited.

The invention discloses also a device for measurement of linear dimension of the object.

Measured object can be opaque or transparent, because the measurement is based on diffraction phenomena on the edges of the object. The word "edge" means here the area of external surface of the object which participates in creation of a diffraction pattern. Obviously, rounded object, e.g. a ball, has not a physical edge. The area of the surface which participates in diffraction is more or less this which determines a shadow of the object illuminated by a point source or with a parallel beam of light.

Although in the embodiment of the invention, described below in detail, visible light is used, the principle of measurement is the same for any kind of electromagnetic or corpuscular radiation (de Broglie waves), therefore the invention can be applied evenly with use of radio-sources, IR, UV or X-ray sources, or even particles in atomic microscopy. Measured object can be opaque for one wavelength and transparent or semi-transparent for another, but this does not interfere in the results of proposed measurement.

Measurement of a linear dimension of an object is a common procedure, however special methods were proposed for special uses, in particular for more accurate measurements.

In one group of methods, the measured object is scanned with a beam of light, usually emitted by a laser. For example, in the patent application WO8606159 A1 (Kuwabara Y., Nakamura T., JP, 23.10.1986) an optical instrument is disclosed which has a parallel scanning beam generator including a polygonal rotary mirror adapted to reflect an incident beam from a beam generator and obtain a rotary scanning beam, a lens adapted to turn the rotary scanning beam into a parallel scanning beam, and a light-receiving element for detecting the brightness and darkness of the parallel scanning beam passed through an object to be measured. This detector is adapted to detect the time length of a dark or bright portion occurring when a part of the parallel scanning beam is intercepted by the object to be measured, which is disposed between the parallel scanning beam generator and the light-receiving element, and thereby determine the measurement of the object with respect to the scanning direction. A variable lens system which has a focus on an optical path between the beam generator and polygonal rotary mirror is provided on the same optical path.

In another patent application EP1619467 A1 (Takayama Y., JP, 25.01.2006) an optical measuring device capable of improving the precision of detection of contamination on a protective glass is disclosed. In this invention the light beam is also reflected from a hexagonal mirror and such a divergent set of rays is converted with a lens into a parallel set of beams illuminating investigated object. The size of the object can be calculated from the time between the edges of the output signal of the photodetector.

Another group of methods uses non-moving light beam wide enough to illuminate whole object, at least in one direction. In the patent application EP0256539 A2 (Inoue A., Hattori Y., JP, 24.02.1988) a method and apparatus for examining the structure of an optical fiber such as eccentricity, clad and core diameters, non-roundness of clad and so on is described. According to this document the structure of the optical fiber can be accurately determined by irradiating the side wall of the optical fiber with a light such as a white light, a monochromatic light or the like in the direction perpendicular to the axis of the optical fiber. Then an image of the light transmitted through the optical fiber is detected, and/or diffraction fringes formed by the lights diffracted by the outer edge of the optical fiber. Obtained luminance distribution of the light traversing the optical fiber is used to calculate accurate structural parameters of the optical fiber.

In the patent document GB1399474 A (Pryor T., US, 02.07.1975) the spacing between two objects, or a change in the spacing, is determined by diffracting light (visible or infrared) at their edges to form an interference pattern having fringe spacing related to the object spacing. The pattern may be examined and measured e.g. photo-electrically by traversing a detector over the pattern with a micrometer, or photo-electrically by counting the fringes passing a fixed detector. Spacing between the objects in orthogonal directions (transverse and along the light beam), results in an asymmetrical pattern in which the fringe spacing is a function of both the spacing and the displacement. Examination (fringe counting) by two detectors symmetrically positioned with respect to the object axis permits both components of the changes to be determined. A laser is used as the light source.

Also in the patent document US4172664 A (Charsky R., Flamholz A., US, 30.10.1979) the problem of diffraction type alignment or measurement of configuration on spaced planes is discussed. A system for measuring the lateral displacement between edges located on two spaced apart objects, with a precision in the order of 1 microinch, generates and analyses the diffraction pattern produced by the physical edge of one object and the aerial image of the edge on the other object. The system can be used for the alignment of the objects or the comparison of patterns located on the objects.

Third group of methods requires the object to be moved in a direction perpendicular to the light beam. In the patent document US4112309 A (Nakazawa K., Tanimoto A., JP, 05.09.1978) an apparatus for photoelectrically detecting the position of each of the edges of a line having the opposite edges thereof formed substantially parallel to each other on a substrate thereby to measure the width of the line, is disclosed. It comprises a source of coherent light, means for condensing the coherent light into a tiny light spot which illuminates the line, means for imparting to the tiny light spot a minute oscillation having an amplitude less than the width of the line, means for providing relative movement of the tiny light spot and the line so that diffracted light may be created at each of the edges of the line, a first photoelectric conversion element for receiving chiefly the diffracted light created at one of the edges of the line, a second photoelectric conversion element for receiving chiefly the diffracted light created at the other edge of the line, and a circuit for producing position signals corresponding to the edges of the line from the output signals from the first and second photoelectric conversion elements.

Additionally, in the patent document GB1456286 A (VEB Carl Zeiss Jena, DD, 24.11.1976) one finds a teaching on how to measure a deflection of a beam of light. The measurement system has a slit illuminated by a source of light and imaged in the image plane by condensing and imaging lenses. Another lens placed behind the image plane images an object field located in the parallel beam between the condensing and imaging lenses, at the detector plane. The system comprises also an optical element, e.g. a grating, placed in the image plane. The optical element is a glass plate with strips or edges of areas which cause a phase shift of 180 degrees and is placed in the diffraction pattern of the slit so as to maximize or minimize the light intensity at the detector. Lateral movement of the parallel beam by an object present in the object field will change the intensity at the detector and the movement can be measured either from the change or by moving a beam displacing element, either manually or automatically to compensate for the change.

In some of the above described devices and methods linear dimension of measured object is determined from the diffraction pattern. However, in none of these documents a reliable method of how to precisely use the diffraction pattern is disclosed. Therefore the aim of the invention is to propose the method and device for precise measurement of linear dimension of an object, with minimized measuring errors and requiring neither a standard nor particular calibration of the measuring setup.

Invented method of measurement of linear dimension of an object is characterised in that a coordinate $^{A}X_{1/2}$ of an edge A of the measured object is determined from a half amplitude $A_{1/2}$ of the highest peak in the diffractive pattern created by the edge A of the object, where the half amplitude $A_{1/2}$ is calculated as half of the difference between this peak amplitude $A_{max}$ and the background T. Similarly, a coordinate $^{B}X_{1/2}$ of an edge B is determined from a half amplitude $B_{1/2}$ of the highest peak in the diffractive pattern created by the edge B, where the half amplitude $B_{1/2}$ is calculated as half of the difference between this peak amplitude $B_{max}$ and the background T. Then the raw linear dimension of the object is calculated from the difference of the coordinates $^{A}X_{1/2}$ and $^{B}X_{1/2}$ of respective edges A and B. Of course, if for example $^{A}X_{1/2}$ is a positive distance measured "to the left" from the reference point, and $^{B}X_{1/2}$ is a positive distance measured "to the right" from the reference point, then mentioned difference has to be changed to the sum of respective coordinates $^{A}X_{1/2}$ and $^{B}X_{1/2}$.

In the proposed method the position coordinates $^{A}X_{1/2}$ and $^{B}X_{1/2}$ for respective edges A and B of the object are preferably determined with use of linear interpolation along a range of 1 $\mu$m in each direction, or 0,5 $\mu$m in each direction, according to the shape of the diffraction pattern. Obtained raw linear dimension of the object is corrected with a set of calibration data and also corrected for the difference in temperature.

In more advanced variant of this method the corrected linear dimension of the object is measured on subsequent levels along the axis perpendicular to both the optical axis and the path of the object, and two-dimensional profile of the object is generated.

Invented method can be realized with different setups, depending for example on the wavelength of radiation used. In the optical range spanning from IR to UV, the width of the beam of radiation emitted by a source is adjusted with a telescopic set of two lenses, and then the beam of radiation is focused in a focus zone around the optical axis with the focusing third lens. The focus zone has a finite diameter and it is an optical image of the source of radiation. The focus zone is a secondary source of radiation, illuminating the measured object. The convergence of the beam of radiation is adjusted with an aperture. The radiation is diffracted on the measured object placed on a support, preferably a supporting arm moving along a path transverse to the optical axis and driven by a transport assembly. Diffracted beam of radiation is then converted into electric signal by a photodetector aligned on the optical axis.

For implementation of the invented method, a device for measurement of linear dimension of an object was also invented. This device is characterised in that it comprises a source of radiation, the means adjusting and focusing the beam of radiation in the focus zone around the optical axis, a photodetector, preferably a photodiode or a photomultiplier converting incident radiation into electric signal, and a transport assembly moving the measured object along a path transverse to the optical axis and arranged between the focus zone and the photodetector.

In the optical range, the source of radiation is a laser, preferably emitting visible light in the range of 380-780 nm, e.g. a He-Ne laser of the wavelength 632.8 nm. Instead of a laser, a source of non-coherent monochromatic radiation can be used, in particular the source provided with a monochromatic filter, preferably an interference filter.

In recommended embodiment the means adjusting and focusing the beam of radiation comprise the telescopic system consisting of the first lens and of the second lens, and also comprise the third lens focusing the beam of radiation in the focus zone. Additionally, an aperture controlling the beam convergence can be installed between the third lens and the focus zone.

The transport assembly comprises an electric motor, preferably a stepper motor, coupled to a gear, preferably a planetary gear and a worm gear, and a support, preferably an arm supporting the measured object when movemed along its path.

To increase the accuracy of determination of the object position during the measuring procedure, the invented device can be provided with an interferometer.

The measurements are automated. In the device according to the invention the transport assembly and the photodetector are coupled to at least one recording and controlling (R&C) device which comprises a memory for storage of pairs of data collected in subsequent moments of time and consisting of the object coordinate along the path, and the level of the photodetector signal, both recorded simultaneously. The R&C device also comprises a photodetector interface coupled to the photodetector, and the positioning interface controlling the position of the support of the measured object, preferably the arm. The photodetector interface and the positioning interface are coupled to a R&C controller which automates the measuring device, and analyzes and processes mentioned pairs of data, and calculates raw and corrected value of linear dimension of the measured object.

In the embodiment designed for determination of precise two-dimensional profile of the measured object the device is provided with additional positioning means adjusting position of the object on an axis perpendicular to both the optical axis and the path. This axis is vertical if the optical axis and the object path are horizontal.

Additionally, a display monitor and a printer are coupled to the R&C device.

With maximum error of about 10-20 nm (two-sigma, or 95.44% confidence level) of the measurement results, the invention is primarily applicable for extremely precise measurements of linear dimensions. Any misalignment within the optical part of the measuring device is immediately detected by proposed method. Invented device has only one moving part, i.e. the transport assembly of the measured object. This reduces the number of sources of errors. Application of high-quality interferometer of accuracy better than 1 nm practically eliminates random errors in determination of the object displacement. Therefore the main sources of errors in measurement are the unpredictable noises and instabilities of the setup, and the systematic errors.

The invention in preferred embodiment is illustrated on the drawing, where Fig. 1 shows schematically the measuring setup, Fig. 2 shows a schematic diagram of the optical part of the measuring setup which illuminates the measured object, and Fig. 3 shows a printout of the diffraction pattern obtained with a photodetector for a bearing roller.

In the illustrated embodiment of the invention the measuring device comprises a source 1 of monochromatic light in the form of a beam of low divergence, a set of collimating and focusing lenses 2 which adjusts the shape of the light beam wavefront before it enters the object zone 3 and falls on the measured object 4, and a photodetector 5. The light source 1, the set of lenses 2 and the photodetector 5 have a common optical axis 6. Preferably, the source 1 of monochromatic light beam of low divergence is a single-mode laser or a multimode laser operating in the single-mode regime. It is convenient to select a laser emitting visible light, i.e. in the range of 380-780 nm, particularly in the range of 600-700 nm. A very common source is a He-Ne laser emitting a light beam of the wavelength of 632.8 nm and a divergence of 1.0 mrad. During the measurement the measured object 4 is translated along a path 7 perpendicular to the optical axis 6. The measurement of the linear dimension of the object 4 requires that its both edges create respective diffraction patterns.

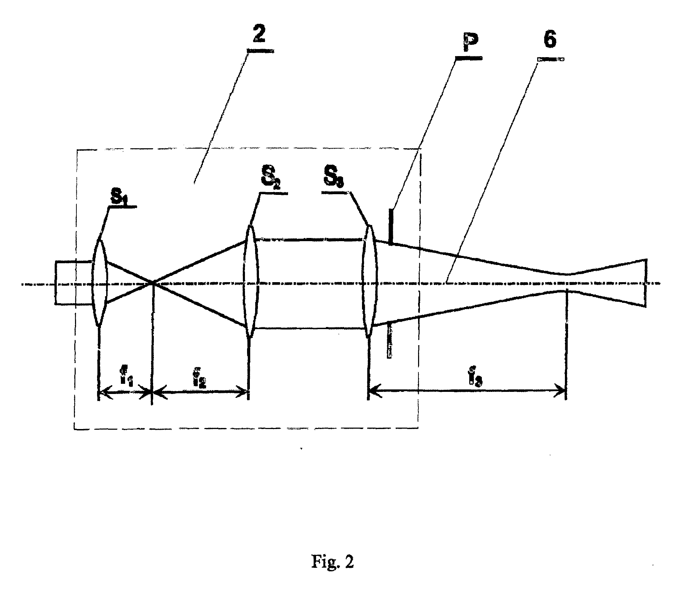

The set of lenses 2 focuses the beam on the optical axis 6 in the focus zone arranged between the set of lenses 2 and the object zone 3 where the measured object 4 is placed. Real focus is not a geometrically infinitesimally small point but rather a place where the beam of light has narrowest cross-section and is characterized in that the wavefront is planar. This focus is a secondary source of light illuminating the object. The set of lenses 2 comprises at least one focusing lens, but preferably three focusing lenses, shown in Fig. 2. The first lens $S_1$ with the first focal length $f_1$ is situated close to the source 1. The value of the distance of the first lens $S_1$ from the light source 1 is of minor importance, because incident light is a parallel beam. The second lens $S_2$ with the second focal length $f_2$ is placed at a distance from the first lens $S_1$ equal to the sum of the first and the second focal lengths $f_1$ and $f_2$. The first and second lenses $S_1$ and $S_2$ adjust the diameter, or width, of the light beam according to the values of the first and second focal lengths $f_1$ and $f_2$. If $f_2$ is greater than $f_1$, the set of lenses $S_1+S_2$ makes the light beam wider. Contrary to that if $f_1$ is greater than $f_2$, the set of lenses $S_1+S_2$ makes the light beam thinner. The set of lenses $S_1+S_2$ is thus a reversible telescope. Values of $f_1$ and $f_2$ should be selected accordingly to the range of measured linear dimensions of the object 4, which can be for example: 1-5 mm, 4-10 mm, 9-20 mm and so on.

Finally, the third lens $S_3$ comprised in the set of lenses 2 focuses the light beam on the optical axis 6 at a distance equal to the third focal length $f_3$ from the third

lens $S_3$. As was explained above, the focus is in fact an area of finite diameter where the wavefront becomes planar. Between the third lens $S_3$ and the focus an aperture P can be installed, providing control of the beam convergence. Exact position of the aperture P is of minor importance. For practical reasons, the object zone 3 is arranged at about 10-20 mm behind the focus, however this value can be changed according to the measuring system performance.

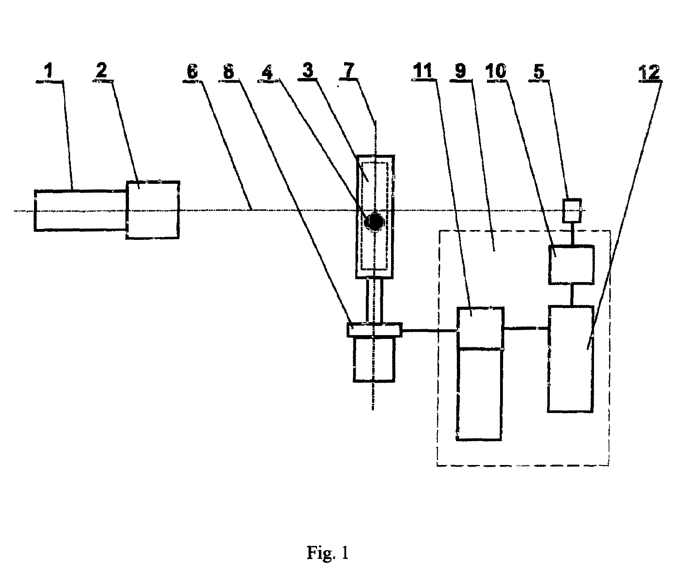

The measuring device according to the invention is provided with a transport assembly 8 which comprises the means for moving the measured object 4 along the path 7. In the embodiment illustrated on the Fig. 1, the transport assembly 8 comprises an electric motor coupled to a gear and moving an arm along the path 7. The object 4 is mounted on this arm. Preferably, the electric stepper motor is connected to a planetary gear and a worm gear. In this embodiment, a quasi-uniform motion with the step length as short as 100 nm can be achieved, with the error smaller than 20 nm. This enables easy determination of precise location of the measured object 4 at each moment of measurement, because the coordinate along the path 7 of the measured object 4 in a given moment of time can be directly calculated from recorded number of the motor steps. In an alternative embodiment, the position of the measured object 4 vs. time is determined with an interferometer providing positioning accuracy of 10 nm.

The transport assembly 8 and the photodetector 5 are coupled to at least one recording and controlling (R&C) device 9 which comprises a memory for storage of pairs of data collected in subsequent moments of time and consisting of the object coordinate along the path 7, and the level of the photodetector signal, both recorded simultaneously. The R&C device 9 comprises also a photodetector interface 10 coupled to the photodetector 5, and the positioning interface 11 controlling the arm position. The photodetector interface 10 and the positioning interface 11 are coupled to a R&C controller 12 which automates the measuring device. The R&C controller 12 automatically controls the transport assembly 8 and records the positions of measured object 4 in subsequent instants, records the levels of the light signal measured by the photodetector 5, as well as analyzes and processes these pairs of data and calculates final value of linear dimension of the measured object 4. Preferably, the measuring device is equipped with a display monitor and a printer (not shown) coupled to the R&C device 9.

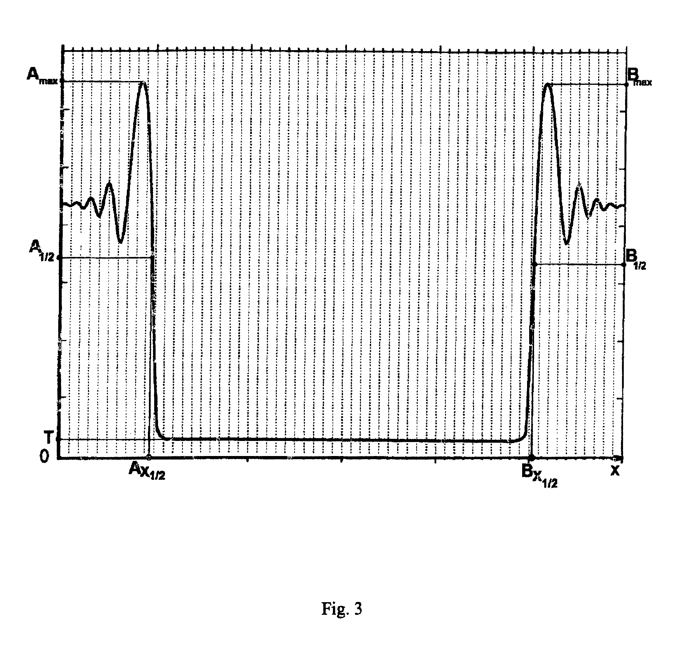

Fig. 3 shows printed diagram of recorded pairs of data, where the spatial coordinates of the object 4 on the path 7 are on the X-axis, while the signal values from the photodetector 5 are on the Y-axis. Obtained profile is a diffraction image of the object edges A and B, with many peaks of decreasing intenities. It has two peaks of highest intensity of the optical signal, i.e. $A_{max}$ - the amplitude for the edge A, and $B_{max}$ - the amplitude for the edge B above the background T. The values of $A_{max}$ and $B_{max}$ are almost equal and if the alignment of the optical elements along the optical axis 6 is preserved, they should not differ by more than approximately 0.5%. When the photodetector 5 is shadowed by the object 4, the signal from the photodetector 5 determines the background T dependent of the light scattered in the housing, random responses of the photodetector 5, fluctuations of temperature, and the like.

If during the measurement the source 1 and the photodetector 5 are not exactly coaxial, the values of respective amplitudes $A_{max}$ and $B_{max}$ will differ significantly. If this difference related to the mean value of both amplitudes exceeds accepted preset threshold C, an alignment of the optical elements along the optical axis 6 should be performed. The threshold C is calculated from the following formula:

$$\frac{|\,A_{max} - B_{max}\,|}{(A_{max} + B_{max})/2} * 100\% = C$$

In exemplary measurement of the cylinder diameter, accepted value of the threshold C should be comprised in the range of 0-0.5%. This ensures that the measurement is reliable. However, if C is greater than 0.5%, a correction of alignment is recommended. For C higher than 1% the alignment procedure should be urgently performed. The value of C exceeding 1.5% means that alignment correction is absolutely necessary.

To calculate real coordinates of the edges A and B of the measured object 4, the values of the amplitudes $A_{max}$ and $B_{max}$ are reduced by the background value T, and the half amplitudes $A_{1/2}$ and $B_{1/2}$ for respective edges A and B are calculated. Then respective coordinates $^AX_{1/2}$ and $^BX_{1/2}$ of the edges A and B of the object 4 are obtained and finally the linear dimension of measured object is determined as a difference of $^AX_{1/2}$ and $^BX_{1/2}$. This raw result corresponds to the displacement of the object 4 from the position $^AX_{1/2}$ to the position $^BX_{1/2}$. However, if the reference point is selected on the intersection of the optical axis 6 and the path 7, the linear dimension of the object 4 is the sum of $^AX_{1/2}$ and $^BX_{1/2}$. Obtained raw result still has to be corrected to increase the accuracy of the measurement.

The values of raw results are corrected with use of a set of calibration data. Additionally, a procedure compensating the random errors can be applied before correction.

The procedure described above is based on determination of the half-amplitudes $A_{1/2}$ and $B_{1/2}$, however other levels of the peak intensity (above the background T), i.e. other than 50% of the peak value, can be used as well. In this case appropriate set of calibration data has to be applied. Theoretical analysis of the diffraction phenomenon shows that the levels of 43% or 64% can be equally selected, however in each case specific set of calibration data has to be used.

To reduce the random errors caused by noise, possible pulsations, etc., linear interpolation is carried out for specific subsets of the pairs of data consisting of the coordinates of the measured object and the levels of intensity of the optical signal recorded simultaneously. Preferably, these subsets are defined as containing the pairs of data including the location coordinates in closed intervals in the immediate vicinity of the position coordinates $^{A}X_{1/2}$ and $^{B}X_{1/2}$, together with the corresponding values of the optical signal levels. Preferred half-lengths of these ranges are of 1 $\mu$m, namely:

$$\left< ^{A}X_{1/2} - 1\ \mu m;\ ^{A}X_{1/2} + 1\ \mu m \right>$$

$$\left< ^{B}X_{1/2} - 1\ \mu m;\ ^{B}X_{1/2} + 1\ \mu m \right>$$

where the levels of the optical signal are linearly approximated and averaged levels of the optical signal are calculated. Based on the calculated average intensity levels of the optical signal the corrected values of the coordinates $^{A}X_{1/2}$ and $^{B}X_{1/2}$ are determined. The calibration data described above and the temperature correction coefficient are then applied.

In another embodiment narrower range for linear interpolation can be defined, with half-length of 0.5 $\mu$m:

$$\left< ^{A}X_{1/2} - 0.5\ \mu m;\ ^{A}X_{1/2} + 0.5\ \mu m \right>$$

$$\left< ^{B}X_{1/2} - 0.5\ \mu m;\ ^{B}X_{1/2} + 0.5\ \mu m \right>$$

If necessary, the half-ranges for both edges may be different, e.g. 0.5 $\mu$m for the edge A and 1 $\mu$m for the edge B, or opposite. This necessity may occur for example when the two edges of the measured object have different curvatures.

Preferably, the linear dimension of the measured object 4 is determined from the corrected coordinates $^{A}X_{1/2}$ and $^{B}X_{1/2}$, where the correction is determined empirically from a number of measurements. In case of measured cylindrical roller of diameter comprised in the range of about 1-4 mm, the correction value equals to 0.01305 mm, which means that calculated raw value of the roller diameter is overestimated by 0.01305 mm.

The device used to measure the cylinder diameter consisted of:

- source 1: He-Ne laser (wavelength 632.8 nm, beam divergence 1.0 mrad, output power 5 mW, the polarization setting RANDOM);

- set of lenses 2: $S_1$ (diameter 4.0 mm, $f_1$ = 12.18 mm), $S_2$ (diameter 12.5 mm, $f_2$ = 25.0 mm), $S_3$ (diameter 12.5 mm, $f_3$ = 64.0 mm); with this set of lenses the light beam is widened from 0.8 mm to 2 mm and its diameter in the focus is 0.028 mm;

- photodetector 5: optoelectronic transducer comprising the Hamamatsu P9217 photodiode (diameter of active light sensing surface: 0.3 mm);

- transport assembly 8: the stepper motor E 103-591-0340 (step 0.9 deg) with the planetary gear AF042-P4010102 (ratio 50:1) and the worm gear (ratio 240;1) driving the arm of a length of 43 mm.

The measured object is the bearing roller of nominal diameter of 2 mm, placed at 12 mm behind the focus zone and at 410 mm before the photodiode.

The device is equipped with several drivers: the system of measurements automation using a data acquisition card Advantech PCI 1710L installed in the PCI bus of the PC, the set of amplifiers supplying the stepper motor controlled through the digital output of the card, and the amplifier for the photodetector. The display monitor and the printer are connected to the PC.

The roller was measured at the temperature of 22.5 °C.

The raw result of the measurement is the roller diameter of 2.00940 mm. Empirical correction of 0.01305 mm was then applied, giving the corrected roller diameter at the temperature of 22.5 °C equal to 1.99635 mm. Value of the roller diameter recalculated to the standard temperature of 20.0 °C equals to 1.99628 mm.

Approximate value of the standard deviation of measured roller diameter is equal to 3.5 nm. Main sources of error are related to determination of the parameters T, $A_{max}$, $B_{max}$, $A_{1/2}$ and $B_{1/2}$.

| | |
|---|---|
| 1 | light source |
| 2 | set of lenses |
| 3 | object zone |
| 4 | object |
| 5 | photodetector |
| 6 | optical axis |
| 7 | path |
| 8 | transport assembly |
| 9 | recording and controlling (R&C) device |
| 10 | photodetector interface |
| 11 | positioning interface |
| 12 | R&C controller |
| $S_1$ | first lens |
| $S_2$ | second lens |
| $S_3$ | third lens |
| $f_1$ | first focal length |
| $f_2$ | second focal length |
| $f_3$ | third focal length |
| P | aperture |

$A_{max}$     peak amplitude for edge A
$B_{max}$     peak amplitude for edge B
$A_{1/2}$     half amplitude for edge A
$B_{1/2}$     half amplitude for edge B
$^{A}X_{1/2}$     coordinate of edge A for half amplitude $A_{1/2}$
$^{B}X_{1/2}$     coordinate of edge B for half amplitude $B_{1/2}$
T     background
C     threshold

**Claims**

1. A method of measurement of linear dimension of an object **characterised in that** a coordinate $^{A}X_{1/2}$ of an edge A of the object (4) is determined from a half amplitude $A_{1/2}$ of the highest peak in the diffractive pattern created by the edge A, where the half amplitude $A_{1/2}$ is calculated as half of the difference between this peak amplitude $A_{max}$ and the background T.

2. The method according to claim 1 **characterised in that** a coordinate $^{B}X_{1/2}$ of an edge B is determined from a half amplitude $B_{1/2}$ of the highest peak in the diffractive pattern created by the edge B, where the half amplitude $B_{1/2}$ is calculated as half of the difference between this peak amplitude $B_{max}$ and the background T, and where the raw linear dimension of the object (4) is calculated from the difference of the coordinates $^{A}X_{1/2}$ and $^{B}X_{1/2}$ of respective edges A and B.

3. The method according to claim 1 or 2 **characterised in that** the position coordinates $^{A}X_{1/2}$ and $^{B}X_{1/2}$ for respective edges A and B of the object (4) are determined with use of linear interpolation along a range of 1 $\mu$m in each direction, preferably 0,5 $\mu$m in each direction.

4. The method according to claim 2 or 3 **characterised in that** the raw linear dimension of the object (4) is corrected with a set of calibration data and corrected for the difference in temperature.

5. The method according to claim 4 **characterised in that** the corrected linear dimension of the object (4) is measured on subsequent levels along the axis perpendicular to both the optical axis (6) and the path (7) of the object (4), and two-dimensional profile of the object (4) is generated.

6. The method according to any claim from 1 to 5 **characterised in that** the width of the beam of radiation emitted by a source (1) is adjusted with a telescopic set of lenses comprising the first lens ($S_1$) and of the second lens ($S_2$), and the beam of radiation is focused in a focus zone around the optical axis (6) with the focusing third lens ($S_3$), and the convergence of the beam of radiation is adjusted with an aperture (P), and the radiation diffracted on the measured object (4) placed on a support, preferably a supporting arm moving along a path (7) transverse to the optical axis (6) and driven by a transport assembly (8), is converted into electric signal by a photodetector (5) aligned on the optical axis (6).

7. A device for measurement of linear dimension of an object **characterised in that** it comprises a source of radiation (1), the means adjusting and focusing the beam of radiation (2) in the focus zone around the optical axis (6), a photodetector (5), preferably a photodiode or a photomultiplier converting incident radiation into electric signal, and a transport assembly (8) moving the measured object (4) along a path (7) transverse to the optical axis 6 and arranged between the focus zone and the photodetector (5).

8. The device according to claim 7 **characterised in that** the source of radiation (1) is a laser, preferably emitting visible light in the range of 380-780 nm, or a source of non-coherent monochromatic radiation, in particular the source provided with a monochromatic filter, preferably an interference filter.

9. The device according to claim 7 or 8 **characterised in that** the means adjusting and focusing the beam of radiation (2) comprise the telescopic system consisting of the first lens ($S_1$) and of the second lens ($S_2$), and also comprise the third lens ($S_3$) focusing the beam of radiation in the focus zone.

10. The device according to claim 9 **characterised in that** an aperture (P) controlling the beam convergence is installed between the third lens ($S_3$) and the focus zone.

11. The device according to any claim from 7 to 10 **characterised in that** the transport assembly (8) comprises an electric motor, preferably a stepper motor, coupled to a gear, preferably a planetary gear and a worm gear, and a support, preferably an arm supporting the measured object (4) in its movement along the path (7).

12. The device according to any claim from 7 to 11 **characterised in that** it is provided with an interferometer to determine actual position of the object (4) during the measuring procedure.

13. The device according to any claim from 7 to 12 **characterised in that** the transport assembly (8) and the photodetector (5) are coupled to at least one recording and controlling (R&C) device (9) which comprises a memory for storage of pairs of data collected in subsequent moments of time and consisting of the object coordinate along the path (7), and the level of the photodetector signal, both recorded simultaneously, and where the R&C device (9) also comprises a photodetector interface (10) coupled to the photodetector (5), and a positioning interface (11) controlling the position of the support of the measured object (4), preferably the arm, and where the photodetector interface (10) and the positioning interface (11) are coupled to a R&C controller (12) which automates the measuring device, and analyzes and processes mentioned pairs of data and calculates raw and corrected value of linear dimension of the measured object (4).

14. The device according to any claim from 7 to 13 **characterised in that** it is provided with additional positioning means adjusting position of the object on an axis perpendicular to both the optical axis (6) and the path (7).

15. The device according to any claim from 7 to 14 **characterised in that** a display monitor and a printer are coupled to the R&C device (9).

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8606159 A1, Kuwabara Y., Nakamura T.
- EP 1619467 A1, Takayama Y.
- EP 0256539 A2, Inoue A., Hattori Y.
- GB 1399474 A, Pryor T.
- US 4172664 A, Charsky R., Flamholz A.
- US 4112309 A, Nakazawa K., Tanimoto A.
- GB 1456286 A, VEB Carl Zeiss Jena